# EUROPEAN PATENT APPLICATION

(11) **EP 2 757 519 A1**
(43) Date of publication of application: **23.07.2014**
(21) Application number: 12830943.2
(22) Date of filing: 13.09.2012
(51) Int. Cl.: G06Q 50/06, G06Q 50/26

(54) **ENERGY CONSERVATION EVALUATION DEVICE, ENERGY CONSERVATION EVALUATION METHOD, SERVER DEVICE, AND PROGRAM**

(30) Priority: 15.09.2011 JP 2011202177
(71) Applicant: Panasonic Corporation, Kadoma-shi, Osaka 571-8501 (JP)
(72) Inventor: TAKAOKA, Koichi, Osaka 540-6207 (JP); NISHIKAWA, Hiroki, Osaka 540-6207 (JP); KURIO, Takashi, Osaka 540-6207 (JP)
(74) Representative: Appelt, Christian W.
(86) International application number: PCT/JP2012/073518
(87) International publication number: WO 2013/039171

(57) **Abstract**

A breakdown estimation unit 10 obtains, by a first processing portion 101, a component ratio, by application, of an energy usage amount in a year using a model case, and prorates, by a second processing portion 102, a record value of the energy usage amount in the year, by application, with the component ratio obtained by the first processing portion 101. Further, the breakdown estimation unit 10 prorates, by month, by a third processing portion 103, the energy usage amounts obtained by the second processing portion 102, excluding the energy usage amount of one application, with a component ratio, by month, of the energy usage amount of the corresponding application in the model case. Further, the breakdown estimation unit 10 estimates, by a fourth processing portion 104, for each month, a residual amount obtained by subtracting the energy usage amounts prorated by the third processing portion 103 from the record value of the energy usage amount as the energy usage amount of the one application in the month. Thus, the energy-saving evaluation device 1 can improve estimation accuracy of energy usage amounts by application without using a separate measurement instrument for each energy application.

## Description

### TECHNICAL FIELD

This invention relates to an energy-saving evaluation device, an energy-saving evaluation method, a server device, and a program that breaks down, by energy application, record values of energy usage amounts at a target customer's facility.

### BACKGROUND ART

Heretofore, in stores such as convenience stores or supermarkets, an energy-saving system that reduces and optimizes overall energy usage amount (consumption) of the entire store by achieving efficient energy usage of apparatuses such as air conditioners or refrigerators has been provided. In order to propose this kind of energy-saving system to a user (customer), it has been conceived to calculate (provisionally calculate) an energy-saving effect of the system (see Document 1: Japan Patent Application Publication No.2002-202998).

In Document 1, estimating an energy usage amount by energy application (in the case of electrical energy, by items such as air conditioning, lighting, and outlet) in designing the energy-saving system is described. It is conceivable to measure the energy usage amount by application using a separate measurement instrument for each application in order to estimate the energy usage amount by application. However, in this case, since introduction of a measurement instrument is required for each application, the load on the user increases in terms of cost and management. The system described in Document 1 estimates a component ratio of the energy usage amount by application for the overall energy usage amount from component ratio data by application stored in a storage means, and then estimates (calculates) the energy usage amount by application (by apparatus) using this component ratio.

However, since an energy usage amount in cooling and heating, for example, varies greatly depending on the season, in actuality, the component ratio of the energy usage amount by application for the overall energy usage amount varies month by month rather than being the same throughout the year. Thus, with a simple simulation in which the overall energy usage amount is broken down by application according to the component ratio data by application, it is likely that the deviation of the estimated energy usage amounts by application from the record values will become relatively large depending on the month.

Meanwhile, a method in which an energy usage amount by application (by load category) is calculated from an overall energy usage amount (consumption) by month has been proposed (see Document 2: Japan Patent Application Publication No.2000-162253). Document 2 describes a method in which the overall energy usage amount of a month in which the overall energy usage amount is the minimum in one year is taken as the energy usage amount of loads other than the cooling and heating load, and the energy usage amounts of loads other than cooling and heating of other months are calculated based on statistical data. The method described in Document 2 is a method in which energy usage amounts of loads other than cooling and heating are calculated, and taking the residual amount as the energy usage amount of the cooling and heating (cooling or heating) load, the energy usage amounts by application are calculated from the overall energy usage amounts by month.

Incidentally, in the method described in Document 2, since upper limits of the energy usage amounts of the loads other than cooling and heating are determined by the record value in a month in which the energy usage amount is the minimum in one year, it is still likely that the deviations of the calculated energy usage amounts by application from the record values will become large.

For example, among loads used in convenience stores or the like, there are loads whose energy usage amount becomes large in summer when the overall energy usage amount is relatively large such as refrigerator-freezers, even excluding the cooling and heating load. However, in the method described above, since the energy usage amounts of the loads other than cooling and heating are calculated taking the energy usage amount of the month in which the energy usage amount is the minimum in one year as the upper limit, all of the energy usage amount that exceeds that of the month is considered to be the energy usage amount of the cooling and heating load. As a result, as described above, the energy usage amount that increased in summer due to the refrigerator-freezer is erroneously estimated to be the energy usage amount of the cooling and heating load.

### SUMMARY OF INVENTION

The present invention has been made in view of the above-described problems, and an object of the present invention is to provide an energy-saving evaluation device, an energy-saving evaluation method, a server device, and a program that improves estimation accuracy of an energy usage amount by application without using a separate measurement instrument for each energy application.

An energy-saving evaluation device of the present invention includes a record input unit configured to input a predetermined target period's worth of record values of energy usage amounts at a target customer's facility for unit periods obtained by dividing the target period into a plurality of periods and a breakdown estimation unit configured to breakdown the record values input by the record input unit into energy applications. The breakdown estimation unit includes a first processing portion configured to obtain a component ratio, by application, of an overall energy usage amount in the target period, using a model case in which an energy usage amount for each of the unit periods in the target period is broken down into the applications, a second processing portion configured to prorate, by application, the record value of the overall energy usage amount in the target period with the component ratio obtained by the first processing portion, a third processing portion configured to prorate, by unit period, the energy usage amount of each application prorated by the second processing portion, excluding the energy usage amount of one application, with a component ratio, by unit period, of the energy usage amount of the corresponding application in the model case, and a fourth processing portion configured to estimate, for each unit period, a residual amount obtained by subtracting the energy usage amounts prorated by the third processing portion from the record value of the energy usage amount as the energy usage amount of the one application in the unit period.

According to the present invention, there is an advantage in that the estimated accuracy of energy usage amounts by application can be improved without using a separate measurement instrument for each energy application.

The energy-saving evaluation device desirably further includes a condition input unit configured to input condition information of the target customer's facility including a scale and a usage mode of the target customer's facility and a model generation unit configured to obtain the model case based on the condition information.

In the energy-saving evaluation device, it is more desirable that the one application is operating an air conditioning device.

The energy-saving evaluation device more desirably includes an effect storing unit that stores in advance, for each application, an energy usage amount reduction rate obtained when an energy-saving measure is implemented and an effect estimation unit configured to estimate an energy-saving effect obtained when the energy-saving measure is implemented on the target customer's facility using the reduction rate and the breakdown result by the breakdown estimation unit.

In the energy-saving evaluation device, it is more desirable that the effect estimation unit is configured to estimate the energy-saving effect for each application.

An energy-saving evaluation method of the present invention includes a record input step of inputting a predetermined target period's worth of record values of energy usage amounts at a target customer's facility for unit periods obtained by dividing the target period into a plurality of periods and a breakdown estimation step of breakdown the record values input by the record input unit into energy applications. The breakdown estimation step includes a first processing step of obtaining a component ratio, by application, of an overall energy usage amount in the target period, using a model case in which an energy usage amount for each of the unit periods in the target period is broken down into the applications, a second processing step of prorating, by application, the record value of the overall energy usage amount in the target period with the component ratio obtained by the first processing portion, a third processing step of prorating, by unit period, the energy usage amount of each application prorated by the second processing portion, excluding the energy usage amount of one application, with a component ratio, by unit period, of the energy usage amount of the corresponding application in the model case, and a fourth processing step of estimating, for each unit period, a residual amount obtained by subtracting the energy usage amounts prorated by the third processing portion from the record value of the energy usage amount as the energy usage amount of the one application in the unit period.

A server device of the present invention includes a communication unit configured to be communicable with a user terminal and a breakdown estimation unit configured to, when a predetermined target period's worth of record values of energy usage amounts at a target customer's facility for unit periods obtained by dividing the target period into a plurality of periods are input by the user terminal, break down the record values into energy applications. The breakdown estimation unit includes a first processing portion configured to obtain a component ratio, by application, of an overall energy usage amount in the target period, using a model case in which an energy usage amount for each of the unit periods in the target period is broken down into the applications, a second processing portion configured to prorate, by application, the record value of the overall energy usage amount in the target period with the component ratio obtained by the first processing portion, a third processing portion configured to prorate, by unit period, the energy usage amount of each application prorated by the second processing portion, excluding the energy usage amount of one application, with a component ratio, by unit period, of the energy usage amount of the corresponding application in the model case, and a fourth processing portion configured to estimate, for each unit period, a residual amount obtained by subtracting the energy usage amounts prorated by the third processing portion from the record value of the energy usage amount as the energy usage amount of the one application in the unit period.

A program according to the present invention causes a computer to function as a record input unit configured to input a predetermined target period's worth of record values of energy usage amounts at a target customer's facility for unit periods obtained by dividing the target period into a plurality of periods, a first processing portion configured to obtain a component ratio, by application, of an overall energy usage amount in the target period, using a model case in which an energy usage amount for each of the unit periods in the target period is broken down into energy applications, a second processing portion configured to prorate, by application, the record value of the overall energy usage amount in the target period with the component ratio obtained by the first processing portion, a third processing portion configured to prorate, by unit period, the energy usage amount of each application prorated by the second processing portion, excluding the energy usage amount of one application, with a component ratio, by unit period, of the energy usage amount of the corresponding application in the model case, and a fourth processing portion configured to estimate, for each unit period, a residual amount obtained by subtracting the energy usage amounts prorated by the third processing portion from the record value of the energy usage amount as the energy usage amount of the one application in the unit period.

### BRIEF DESCRIPTION OF DRAWINGS

FIG. 1 is a block diagram illustrating a schematic configuration of an energy-saving evaluation device according to Embodiment 1;
FIG. 2 is a diagram illustrating an operation of the energy-saving evaluation device according to Embodiment 1;
FIG. 3A is a diagram illustrating a specific example in which an energy usage amount is broken down by application by the energy-saving evaluation device according to Embodiment 1;
FIG. 3B is a diagram illustrating a specific example in which an energy usage amount is broken down by application by the energy-saving evaluation device according to Embodiment 1;
FIG. 4A is a diagram illustrating a specific example in which an energy usage amount is broken down by application by the energy-saving evaluation device according to Embodiment 1;
FIG. 4B is a diagram illustrating a specific example in which an energy usage amount is broken down by application by the energy-saving evaluation device according to Embodiment 1;
FIG. 5A is a diagram illustrating a specific example in which an energy usage amount is broken down by application by the energy-saving evaluation device according to Embodiment 1;
FIG. 5B is a diagram illustrating a specific example in which an energy usage amount is broken down by application by the energy-saving evaluation device according to Embodiment 1;
FIG. 5C is a diagram illustrating a specific example in which an energy usage amount is broken down by application by the energy-saving evaluation device according to Embodiment 1;
FIG. 6 is a diagram illustrating a specific example in which an energy-saving effect is estimated by the energy-saving evaluation device according to Embodiment 1;
FIG. 7A is a diagram illustrating a specific example in which an energy usage amount is broken down by application by an energy-saving evaluation device according to Embodiment 2;
FIG. 7B is a diagram illustrating a specific example in which an energy usage amount is broken down by application by the energy-saving evaluation device according to Embodiment 2;
FIG. 8A is a diagram illustrating a specific example in which an energy usage amount is broken down by application by the energy-saving evaluation device according to Embodiment 2;
FIG. 8B is a diagram illustrating a specific example in which an energy usage amount is broken down by application by the energy-saving evaluation device according to Embodiment 2;
FIG. 9A is a diagram illustrating a specific example in which an energy usage amount is broken down by application by the energy-saving evaluation device according to Embodiment 2;
FIG. 9B is a diagram illustrating a specific example in which an energy usage amount is broken down by application by the energy-saving evaluation device according to Embodiment 2; and
FIG. 9C is a diagram illustrating a specific example in which an energy usage amount is broken down by application by the energy-saving evaluation device according to Embodiment 2.

### DESCRIPTION OF EMBODIMENTS

### Embodiment 1

An energy-saving evaluation device according to the present embodiment is, taking an office, a factory, a store such as a convenience store or a supermarket, or the like as a target customer's facility, for example, used to evaluate an energy usage amount of electricity, gas, or the like at the target customer's facility.

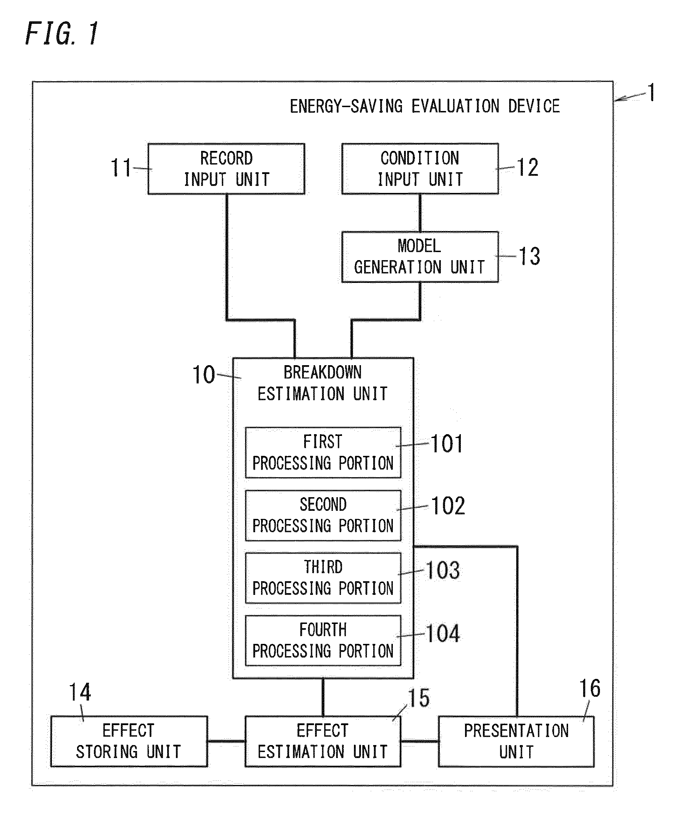

The energy-saving evaluation device 1 includes, as shown in FIG. 1, a record input unit 11 for inputting record values of energy usage amounts at the target customer's facility and a breakdown estimation unit 10 that breaks down the input record values by energy application. Further, the energy-saving evaluation device 1 of the present embodiment includes a condition input unit 12 that inputs condition information described later and a model generation unit 13 that generates a model case described later. Furthermore, in the present embodiment, the energy-saving evaluation device 1 is provided with an effect storing unit 14, an effect estimation unit 15, and a presentation unit 16 described later.

Here, the energy-saving evaluation device 1 is configured by a computer that has a CPU and a memory as the main constituent elements and includes various interfaces such as a display device and an input device (keyboard, mouse, or the like), and realizes the functions of the above units by executing a predetermined program by the computer. Alternatively, a server device that is connected to a network such as the internet and is configured to be communicable with a user terminal may be used instead of the energy-saving evaluation device 1, which will be described later in detail.

The record input unit 11 is configured to input a predetermined target period's worth of record values of energy usage amounts at a target customer's facility for unit periods (here "one month") obtained by dividing the target period (here "one year") into a plurality of periods. Here, the energy usage amount is the overall energy usage amount at the target customer's facility, that is, the usage amount in a state before breakdown by application. That is to say, a user inputs, for example, record values of the energy usage amounts by month that are written on bills for electricity or gas charge for the target period (one year) through the record input unit 11.

The record input unit 11 uses a display device (not shown) and an input device (not shown) of the computer as a user interface. Thus, the user can input the record values of the energy usage amounts to the record input unit 11, by inputting the record values of the energy usage amounts through the input device in an interactive mode according to display on the display device. The record input unit 11 outputs the record values of the energy usage amounts that are input in this way to a breakdown estimation unit 10.

The breakdown estimation unit 10 breaks down, by application, the record values of the energy usage amounts by month using the record values of the energy usage amounts input by the record input unit 11 and a model case that is generated in a model generation unit 13, and estimates the breakdown by application. Here, "application" means the way the energy is used, that is, what kind of loads (facility, device, apparatus) the energy is used (consumed) for at the target customer's facility. In the present embodiment, a case will be described as an example in which the energy is electricity and the record values are broken down into four applications of "air conditioning" for driving air conditioning devices, "lighting" for lighting of lighting devices, "outlet power" that is consumed by apparatuses that are connected to outlets, and "other" that is consumed by the remaining loads.

Incidentally, as a method for breakdown by application the record values of the energy usage amounts, a method is conceivable in which record values of the energy usage amounts are measured by application using a separate measurement instrument for each application. However, in this case, since measurement instruments are required to be introduced by application, the user's load increases in terms of cost and management. That is, if separate electricity meters (measurement instrument) are used for respective applications of "air conditioning", "lighting", "outlet power", and "other", it is possible to measure the record values of the energy usage amounts by application. However, in this case, since the user is required to introduce a plurality of electricity meters and sum up measurement values of the individual electricity meters, the user's load increases. On the other hand, in the present embodiment, since the breakdown estimation unit 10 estimates a breakdown by application from the record values of the overall energy usage amounts at the target customer's facility, the user's load can be reduced in terms of cost and management compared with the case in which separate measurement instruments are introduced for respective applications.

The breakdown estimation unit 10 includes a first processing portion 101, a second processing portion 102, a third processing portion 103, and a fourth processing portion 104. The breakdown estimation unit 10 breaks down by application the record values of the overall energy usage amount at the target customer's facility by performing operations with the first processing portion 101 to the fourth processing portion 104. The method with which the breakdown estimation unit 10 breaks down the record values into energy usage amounts by application will be described later in detail.

A condition input unit 12 receives input of condition information regarding the target customer's facility necessary for generating a model case. Here, the condition information includes at least a scale (total floor area or number of floors) and a usage mode (office, factory, convenience store, or the like) of the target customer's facility. In the present embodiment, the condition information is broadly divided into building information regarding a building and facility information regarding a facility/device installed in the building. The building information includes area, hours of use (business hours), average number of people in the building, floor area by department, or the like, and the facility information includes kinds of facility/device in operation, type of cooling and heating (hot water type floor heating, air conditioner, or the like), or type of water heater (electrical heating type, heat pump type, or the like).

The condition input unit 12 uses a display device and an input device of the computer as the user interface. Thus, the user can input the condition information necessary for the target customer's facility to the condition input unit 12, by inputting the condition information through the input device in an interactive way according to display on the display device. The condition input unit 12 outputs the condition information that is input in this way to a model generation unit 13. Note that the condition input unit 12 may be divided into a building information input unit used for inputting the building information and a facility information input unit used for inputting the facility information.

The model generation unit 13 obtains a model case in which energy usage amounts by unit period for the target period are broken down by energy application based on the condition information input by the condition input unit 12. Here, the model case is composed of results obtained by simulating energy usage amounts by application based on statistical data for a model customer's facility that is similar to the target customer's facility in terms of conditions (scale, usage mode, or the like) specified by the condition information. In the present embodiment, the target period is one year and the unit period is one month. The breakdown estimation unit 10 breaks down the record value of the energy usage amount in each month (unit period) for one year (target period) into the four applications of "air conditioning", "lighting", "outlet power", and "other". Therefore, the model generation unit 13 obtains as the model case simulation results in which an energy usage amount in each month for one year at the model customer's facility is broken down into the above four applications in accordance with the breakdown estimation unit 10.

To be specific, the model generation unit 13 of the present embodiment simulates, for the model customer's facility corresponding to the input condition information of the target customer's facility, an energy usage amount for each application by month from various conditions. For example, in terms of the "air conditioning" application of operating air conditioning devices (cooling and heating), the model generation unit 13 performs simulation on the energy usage amount using detailed information such as average hours of sunlight or average temperature for the month in the area where the model customer's facility is located (area of target customer's facility).

In terms of the "lighting" application for lighting of lighting devices and the "outlet power" application, the model generation unit 13 performs simulation on the energy usage amount using detailed information relating to the usage conditions of the lighting devices and the outlets for the month at the model customer's facility. As an example, the model generation unit 13 obtains the energy usage amounts for "lighting" application and "outlet power" application in each department by the multiplication of a floor area of the department, a basic unit, and hours of use of the model customer's facility, for example.

Similarly, for the "other" application, the model generation unit 13 performs simulation on the energy usage amount using information such as kinds of loads (facility, device, apparatus) that were actually operated at the model customer's facility. That is, the model generation unit 13 obtains the energy usage amount of "other" according to the existence of loads such as a hot-water supply system, ventilating fans, elevator facilities (elevator), water supply and drainage equipment, or automatic vending machines, other than air conditioning devices, lighting devices, and electrical apparatuses connected to the outlets. As an example, the model generation unit 13 obtains the energy usage amount by the hot-water supply equipment by multiplication of an average number of people in the building, an average usage amount of hot water per person, and a basic unit (energy required to boil a unit amount of water) for the month at the model customer's facility, for example.

In this way, the model generation unit 13 simulates by month the energy usage amount for applications of "air conditioning", "lighting", "outlet power", and "other" for the model customer's facility whose conditions are common to the target customer's facility. The model generation unit 13 generates a model case in which the energy usage amounts by month for one year at the model customer's facility are broken down into the above four applications by repeating the simulation by month for one year. The model generation unit 13 outputs the obtained model case to the breakdown estimation unit 10.

Further, in the present embodiment, the model generation unit 13 obtains energy usage amounts for one year (energy usage amount per year) at the model customer's facility, by application, along with the model case by adding up the energy usage amounts of the model customer's facility, by application, for the year when generating the model case. That is, the model generation unit 13 obtains the energy usage amounts at the model customer's facility, by application, for each month (monthly) and for a year (full year).

The model generation unit 13 may measure and add up actually the energy usage amounts by application and by month for a plurality of customer's facilities whose conditions are different in scale, usage mode, or the like, as a target, and obtain a model case in which the conditions match that of the target customer's facility among the aggregated results. In this case, since the model case is generated based on energy usage amounts actually measured at customer's facilities, the model generation unit 13 can obtain a highly reliable model case in which a situation that is difficult to be reflected by simulation is reflected.

Here, the above described model case, once generated by the model generation unit 13, can be applied repeatedly to the same target customer's facility. Thus, the model generation unit 13 may be configured to record the generated model cases in a memory (not shown) associated with the target customer's facilities, and after that, when a target customer's facility is designated, read out a model case corresponding to the target customer's facility. In this configuration, the user can, once the condition information is input by the condition input unit 12, specify the model case that is required for breakdown the energy usage amount at the breakdown estimation unit 10 simply by inputting a user ID or the like, and there is an advantage in that the task of re-inputting the condition information is not required. Also, in the model generation unit 13, since generation of a model case that is applied to the same target customer's facility is required only once, the processing load on the model generation unit 13 is reduced compared with the model case for the same customer's facility being repeatedly generated.

Note that, in the present embodiment, although the energy-saving evaluation device 1 has the condition input unit 12 and the model generation unit 13, it is not limited to this configuration and the condition input unit 12 and the model generation unit 13 may be omitted from the energy-saving evaluation device 1. That is, the energy-saving evaluation device 1 may be configured to acquire a model case that is generated by an external simulation device and use it with the breakdown estimation unit 10, or to use a specific model case that is pre-registered at the time of product shipment at the breakdown estimation unit 10. Alternatively, when a service to generate this kind of model case by simulation is provided, the energy-saving evaluation device 1 may input a model case that is obtained using this service and use it at the breakdown estimation unit 10.

Incidentally, the breakdown estimation unit 10 breaks down, using record values of energy usage amounts by month and a model case, the record values by application with a configuration described below.

That is, the breakdown estimation unit 10 obtains a component ratio, by application, of the overall energy usage amount in the target period (during one year) by the first processing portion 101 using the model case. In the present embodiment, since the energy usage amounts at the model customer's facility, by application, in one year have already been obtained by the model generation unit 13, the breakdown estimation unit 10 obtains the component ratio of the energy usage amounts of the model customer's facility, by application, in one year using the result.

Further, the breakdown estimation unit 10 prorates, by the second processing portion 102, the record value of the overall energy usage amount (overall energy usage amount of the target customer's facility not broken down by application) in the target period (during one year), by application, with the component ratio obtained by the first processing portion 101. That is, the second processing portion 102 prorates the record value, by application, of the overall energy usage amount of the target customer's facility for one year according to the component ratio, by application, of the energy usage amount of the model customer's facility for one year. Note that, the breakdown estimation unit 10 is configured to obtain the record value of the overall energy usage amount of the target customer's facility for one year by adding up the energy usage amounts by month that are input by the record input unit 11 before or after obtaining the component ratio by the first processing portion 101.

Further, the breakdown estimation unit 10 prorates, by the third processing portion 103, the energy usage amount of each application prorated by the second processing portion 102, excluding the energy usage amount of one application, by unit period (one month), according to the model case. That is, the third processing portion 103 prorates, by month (unit period), the energy usage amount of each application, prorated by the second processing portion 102, excluding the energy usage amount of one application, with a component ratio, by month (unit period), of the energy usage amount of the corresponding usage in the model case. In other words, the record value of the energy usage amount of each application, excluding that of the energy usage amount of one application, is prorated, by month, with the same component ratio as that of the model case, and as a result the applications, excluding one application, are assigned to the record values, by month, of the overall energy usage amount of the target customer's facility.

Note that, if the sum of energy usage amounts in a certain month exceeds the record value for the month, as a result of prorating the energy usage amounts, the third processing portion 103 corrects the allotment of the energy usage amounts such that the sum of the energy usage amounts of the applications, excluding the energy usage amount of one application, matches the record value for that month. At this time, the third processing portion 103 corrects the allotment of the energy usage amounts of the applications for the month, which is the correction target, by maintaining the component ratio by application, in which the one application is excluded.

Further, the breakdown estimation unit 10 estimates, for each unit period (one month), by the fourth processing portion 104, a residual amount obtained by subtracting the energy usage amounts prorated by the third processing portion 103 from the record value of the energy usage amount as the energy usage amount of the one application in the unit period (in the month). That is, the fourth processing portion 104 estimates the residual amount record value that is not assigned any of applications when the applications excluding the one application are assigned to the record value of the overall energy usage amount, for each month, of the target customer's facility as the energy usage amount of the one application. In other words, the fourth processing portion 104 assigns the one application to the residual amount record value of the energy usage amount that is not assigned any of the applications by the third processing portion 103.

Thus, the breakdown estimation unit 10 estimates, by unit period, first the energy usage amount of each of applications excluding one application by the third processing portion 103, and estimates the residual amount as the energy usage amount of the one application by the fourth processing portion 104, and as a result the record values of the energy usage amounts are broken down by application.

Here, in the present embodiment, the one application that is assigned to the residual amount record values of the energy usage amounts by the fourth processing portion 104 is assumed to be "air conditioning". That is, the energy usage amount of the "air conditioning" application is considered to be variable, since it varies greatly according to the operation of the load (air conditioning device) such as a change in set temperature. In comparison, energy usage amounts of the "lighting", "outlet power", and "other" applications are considered to be fixed compared with the "air conditioning" application, since although small variations occur due to changes in load operation, the variations are not as large as that of the "air conditioning" application. Thus, in the present embodiment, the breakdown estimation unit 10 first prorates the energy usage amounts of the "lighting", "outlet power", and "other" applications that are considered to be fixed, and regards the residual amount as the energy usage amount of the variable "air conditioning" application, and as a result highly-accurate breakdown of the energy usage amount is realized.

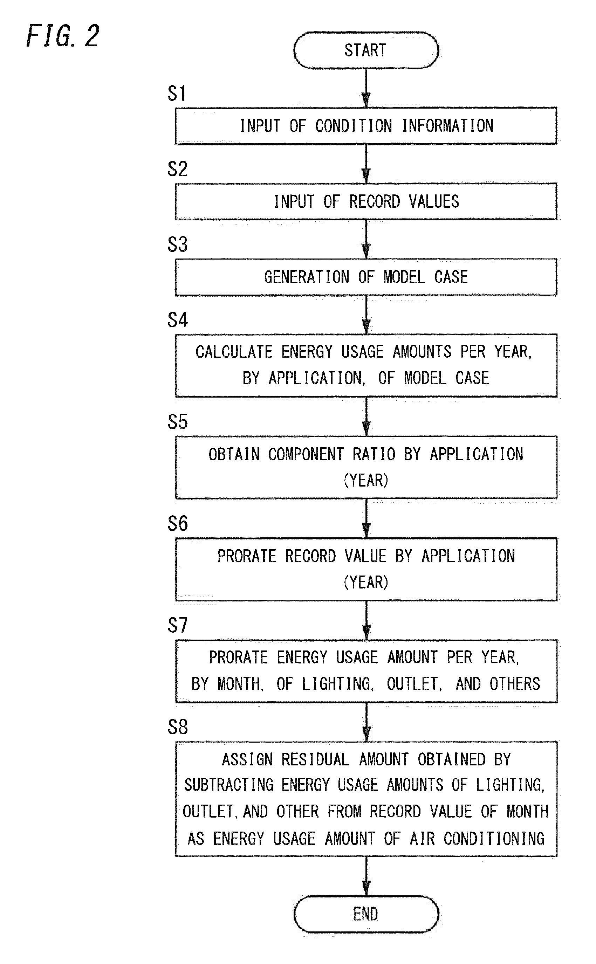

Hereinafter, a specific method (energy-saving evaluation method) in which an energy usage amount of a target customer's facility is broken down by application using the energy-saving evaluation device 1 will be described with reference to FIGS. 2 to 5C.

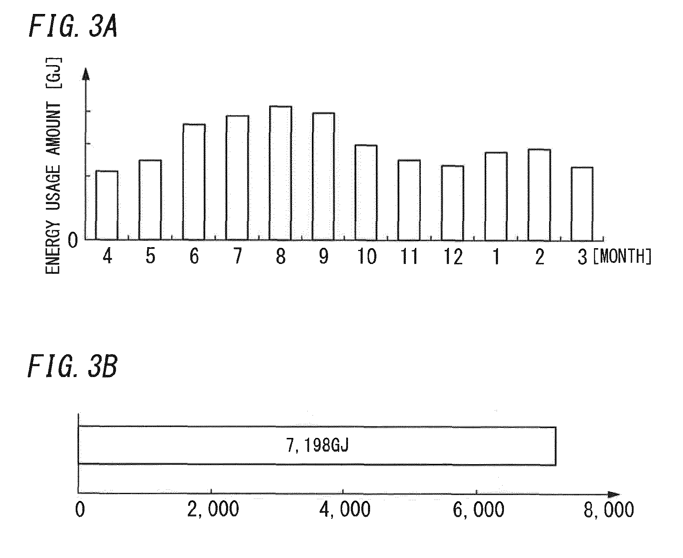

A user, first, inputs condition information necessary for the target customer's facility using the condition input unit 12 (S1 in FIG. 2). Further, the user inputs record values of energy usage amounts by month shown in FIG. 3A using the record input unit 11 (S2 in FIG. 2). The record values input at this time are record values of overall energy usage amounts of the target customer's facility that are not broken down by application. The breakdown estimation unit 10 obtains a record value of the overall energy usage amount in one year of the target customer's facility (here, 7198[GJ]), as shown in FIG. 3B, by summing up the record values of respective months that are input in this way.

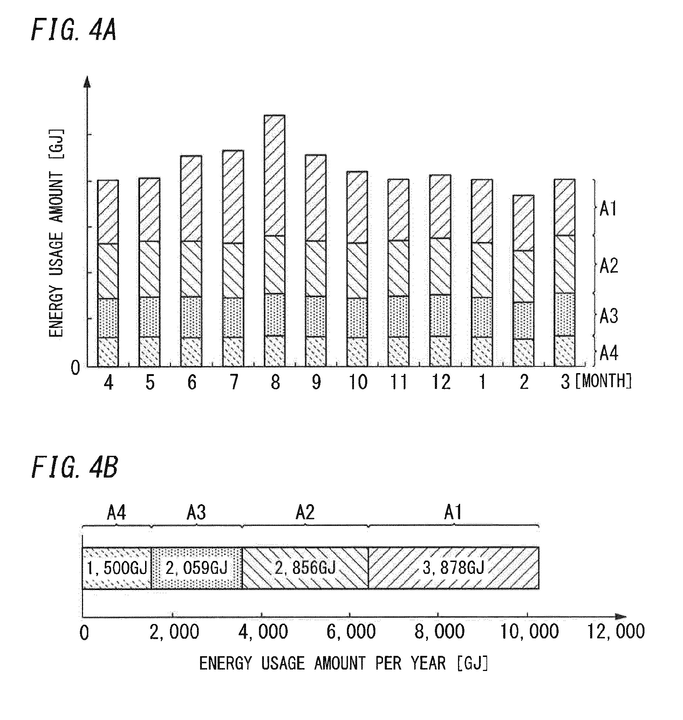

The model generation unit 13 obtains a model case in which the energy usage amounts of respective months for one year at the model customer's facility are broken down into four applications of air conditioning A1, lighting A2, outlet power A3, and others A4, as shown in FIG. 4A, based on the condition information input by the condition input unit 12 (S3 in FIG. 2). Further, the model generation unit 13 obtains energy usage amounts per year, by application, at the model customer's facility, as shown in FIG. 4B, by adding up the energy usage amounts, by application, of the model case for one year (S4 in FIG. 2). In FIG. 4B, as the breakdown of the energy usage amount per year of the model case, a case where the air conditioning A1, lighting A2, outlet power A3, and others A4 are 3878[GJ], 2856[GJ], 2059[GJ], and 1500[GJ], respectively, is shown as the example.

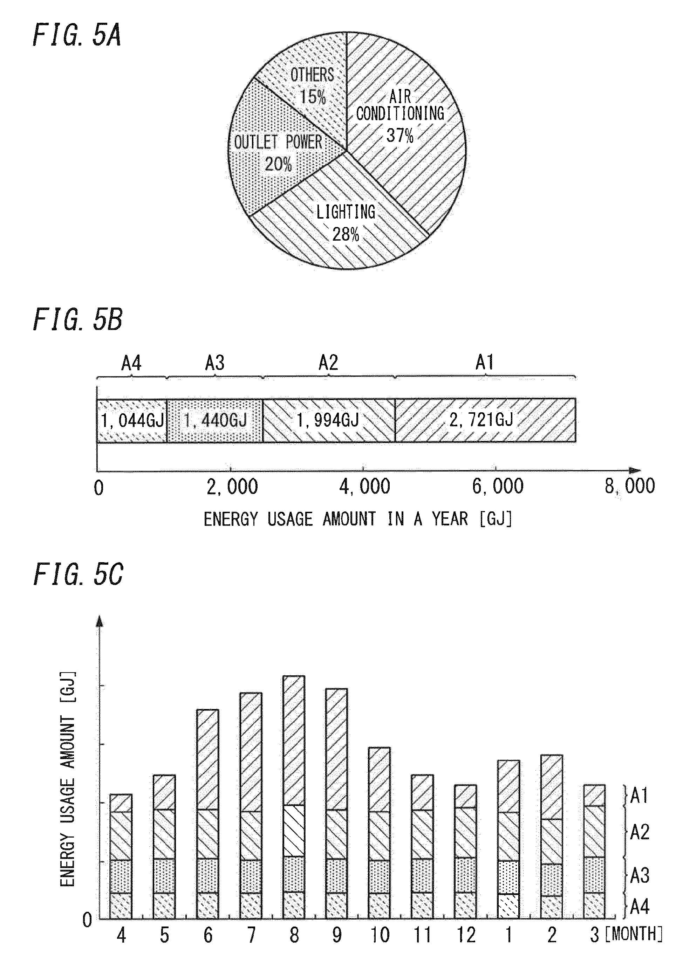

Then, the breakdown estimation unit 10 first obtains, by the first processing portion 101, a component ratio, by application, of the energy usage amount per year (see FIG. 4B) at the model customer's facility as shown in FIG. 5A (S5 in FIG. 2: first processing step). In the example shown in FIG. 5A, "air conditioning" application, "lighting" application, "outlet power" application, and "other" application are 37[%], 28[%], 20[%], and 15[%], respectively.

Next, the breakdown estimation unit 10 prorates by application, as shown in FIG. 5B, by the second processing portion 102, the record value of the energy usage amount in one year (see FIG. 3B) with the component ratio obtained in the first processing step (S5) (S6 in FIG. 2: second processing step). In the example in FIG. 5B, the breakdown of the record value of the energy usage amount in one year becomes 2721[GJ] for air conditioning A1, 1994[GJ] for lighting A2, 1440[GJ] for outlet power A3, and 1044[GJ] for others A4.

After that, the breakdown estimation unit 10 prorates, by the third processing portion 103, the energy usage amounts in one year, by month, of each application obtained in the second processing step (S6), excluding the energy usage amount of the air conditioning A1 application, with the same component ratio as that of the model case (S7 in FIG. 2: third processing step). Then, the breakdown estimation unit 10 sorts, for each month, by the fourth processing portion 104, the residual amount obtained by subtracting the energy usage amounts prorated in third processing step (S7) from the record value of the energy usage amount (see FIG. 3A) to air conditioning A1 (S8 in FIG. 2: fourth processing step). That is, the breakdown estimation unit 10 breaks down the record values of the energy usage amount by month into applications (A1 to A4), as shown in FIG. 5C, in third processing step (S7) and fourth processing step (S8), and estimates breakdown of the record values by application.

Moreover, the energy-saving evaluation device 1 of the present embodiment includes, as shown in FIG. 1, an effect storing unit 14, an effect estimation unit 15, and a presentation unit 16, and can utilize the record values that are broken down by application by the breakdown estimation unit 10 as described above for estimating an energy-saving effect at the target customer's facility.

That is, the effect storing unit 14 stores in advance, for each application, energy usage amount reduction rates, broken down by application, that are obtained when energy-saving measures are implemented. Here, a countermeasure list is stored in the effect storing unit 14. The countermeasure list is a list in which a plurality of contents of the energy-saving measures are defined by application, energy-saving effects expected for respective energy-saving measures are calculated by simulation based on statistical data of the model customer's facility, and the energy-saving effects are put into a database as a reduction rate. That is, on the countermeasure list in the effect storing unit 14, the contents of the energy-saving measures by application are stored in association with the expected reduction rate of the energy usage amount. Note that, the energy-saving measures here include load operation that is not accompanied by specific investment (for lighting device for example, "lights off during the lunch break" or the like), upgrading/updating of the load that is accompanied by investment (for lighting device for example, "introduction of a human detection sensor" or the like).

The above countermeasure list can be displayed on a display device (not shown) by the presentation unit 16, and the user can select desired energy-saving measures among the countermeasure list by operating an input device (not shown) while viewing the displayed countermeasure list. Then, the presentation unit 16 recognizes the selected energy-saving measures according to the operation input to the input device in a state in which the countermeasure list is displayed, and outputs the result (selected energy-saving measures) to the effect estimation unit 15. Note that the presentation unit 16 is configured to be capable of multi-selection of a plurality of energy-saving measures, or re-selection of the energy-saving measures.

The effect estimation unit 15 estimates, when the user selects energy-saving measure among the countermeasure list, an energy-saving effect in a case where the selected energy-saving measure is implemented at the target customer's facility. Here, the effect estimation unit 15 estimates the energy-saving effect by the energy-saving measure using the reduction rate stored in the effect storing unit 14 and the breakdown result by the breakdown estimation unit 10. Specifically, the effect estimation unit 15 calculates the energy-saving effect individually by application using the energy usage amounts of each of the applications of "air conditioning", "lighting", "outlet power", and "other" that are broken down by the breakdown estimation unit 10 and the reduction rates that correspond to the energy-saving measures on the countermeasure list selected by the user. Further, the effect estimation unit 15 calculates the overall energy-saving effect at the target customer's facility by adding up the energy-saving effects by application.

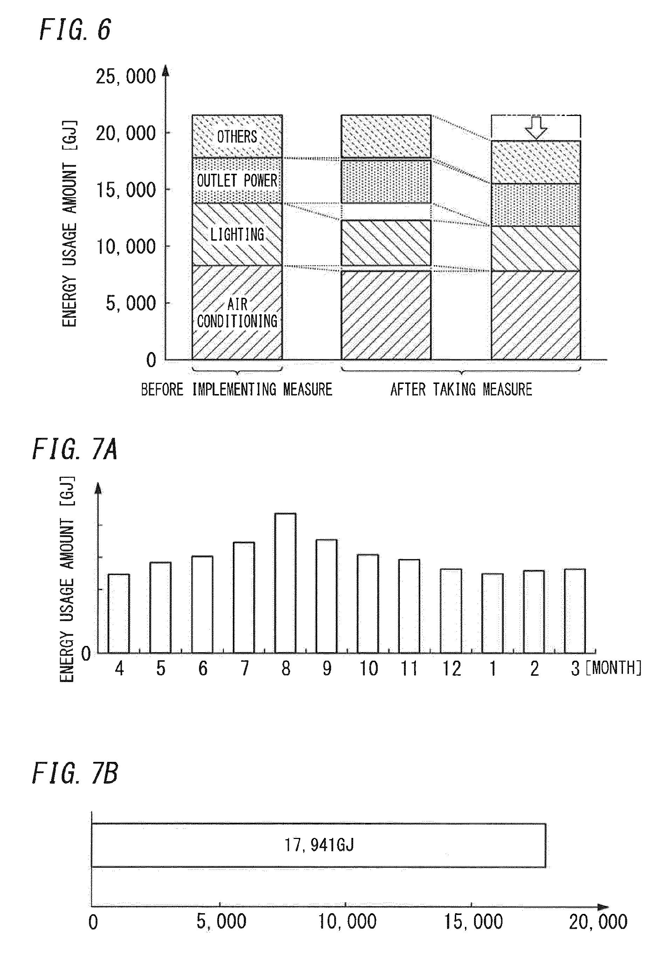

For example, in a case where certain energy-saving measures are selected for the respective applications of "air conditioning", "lighting", and "outlet power", the effect estimation unit 15 calculates the energy-saving effect for each application, as shown in FIG. 6, and calculates overall energy-saving effect at the target customer's facility by adding up these energy-saving effects. That is, the effect estimation unit 15 reads out the reduction rates from the effect storing unit 14 that correspond to the energy-saving measures selected by the user for the respective applications of "air conditioning", "lighting", and "outlet power", and calculates the energy-saving effect for each application using these reduction rates. Here, the effect estimation unit 15 calculates the energy usage amount after reduction (energy-saving effect) by "a" × [1 - reduction rate], where "a" is the energy usage amount estimated by the breakdown estimation unit 10 for the respective applications of "air conditioning", "lighting", and "outlet power", and estimates the calculated result as the energy-saving effect.

The presentation unit 16 presents the energy-saving effect estimated by the effect estimation unit 15 to the user by display on a display device (not shown). Here, the mode in which the presentation unit 16 presents the energy-saving effect is not limited, and the energy-saving effect (energy usage amount that can be reduced) by application and for the customer's facility in total may be presented as numeric values or a graph such as FIG. 6 may be displayed, for example. Also, the presentation unit 16 maybe presents the energy-saving effect to the user in a method other than display. Thus, the user can be made aware of rough standards as to the degree of reduction in the energy usage amount that can be expected by the energy-saving measures selected by the user. Note that the effect estimation unit 15 estimates the energy-saving effect every time the energy-saving measures are re-selected, and presents the result to the user by the presentation unit 16. Thus, the user can compare and examine a plurality of energy-saving measures.

The presentation unit 16 is configured to present not only the energy-saving effect estimated by the effect estimation unit 15, but also breakdown results by the breakdown estimation unit 10 to the user. Here, the presentation unit 16 is configured to switchably present the breakdown by application of the energy usage amount in one year, as shown in FIG. 5B, or the breakdown by application of the energy usage amounts by month, as shown in FIG. 5C, for example.

According to the energy-saving evaluation device 1 of the configuration described above, the breakdown estimation unit 10 breaks down the record values by application using the record values of the overall energy usage amount of the target customer's facility in the target period, and the model case in which the energy usage amounts by unit period in the target period are broken down by application. That is, the breakdown estimation unit 10, first, breaks down the record value in the target period by application by the first processing portion 101 and the second processing portion 102, and prorates the energy usage amounts of each of applications, excluding one application, by unit period according to the model case by the third processing portion 103.

Thus, in the present embodiment, since the breakdown estimation unit 10 estimates the breakdown by application using the record values of the overall energy usage amount of the target customer's facility that are input by the record input unit 11, the user's load in terms of cost and management can be reduced compared with the case where measurement instruments are introduced by application.

Further, since the breakdown of the energy usage amount broken down by application by the breakdown estimation unit 10 can be obtained by unit period, the breakdown is not constant throughout the target period, and becomes close to the actual breakdown that varies by unit period. Thus, in the present embodiment, compared with a simple simulation in which overall energy usage amounts of the target customer's facility in the target period are broken down by application according to component ratio data by application, the deviations of the estimated energy usage amounts by application from the record values decrease, in each unit period.

Here, the breakdown estimation unit 10 prorates, by the third processing portion 103, the energy usage amount of each application excluding one application, by unit period, with the same component ratio as that of the model case. Therefore, the deviations of the energy usage amounts of each application by unit period estimated by the breakdown estimation unit 10 from the record values decrease, without an upper limit being set by record values of a specific unit period. Thus, according to the configuration of the present embodiment, there is an advantage in that the estimation accuracy of the energy usage amount by application improves.

As a method different from the present embodiment, a method is conceivable in which the record values of the energy usage amounts are broken down by unit period for all applications with the component ratio by unit period for each application in the model case. However, with this method, since the overall energy usage amounts of the target customer's facility are prorated by unit period with the same component ratio as that of the model case, the energy usage amount of each unit period after proration may not coincide with the record value that is input in each unit period and lacks reliability. On the other hand, in the energy-saving evaluation device 1 of the present embodiment, after breaking down the energy usage amounts of applications excluding one application by the third processing portion 103, the residual amount is estimated to be the energy usage amount of the one application by the fourth processing portion 104. Thus, for each unit period, the energy usage amount after proration matches the record value that is input in each unit period, and as a result reliability improves.

Furthermore, since the energy-saving evaluation device 1 of the present embodiment includes the model generation unit 13 that obtains a model case based on condition information input by the condition input unit 12, a model case that matches the condition of the target customer's facility input by the user can be applied. Therefore, the breakdown estimation unit 10 can break down an energy usage amount by application using a model case that corresponds to an actual scale and usage mode of the target customer's facility, and as a result reliability of the breakdown result improves.

Also, since the energy-saving evaluation device 1 includes the effect estimation unit 15 that estimates an energy-saving effect when an energy-saving measure is implemented to the target customer's facility, there is an advantage in that a user can easily picture the merit of implementing the energy-saving measure with referring to the estimated energy-saving effect. Furthermore, the effect estimation unit 15 estimates energy-saving effects by implementing energy-saving measures for respective energy applications. Therefore, the effect estimation unit 15 can estimate an energy-saving effect that is close to an effect obtained by actually implementing an energy-saving measure, even though the energy-saving effect actually expected by the energy-saving measure is not uniform for all applications and differs by application.

Note that, the unit period is not limited to one month, and may be a period that results from dividing the target period into a plurality of periods. It may be three months, two weeks, one week, or the like, for example. Also, the target period is not limited to one year, and may be a set of a plurality of unit periods. It may be half a year, three months, one month, or the like, for example.

Incidentally, in the above embodiment, the breakdown estimation unit 10 uses, when breaking down record values of energy usage amounts by application, a model case that is obtained by simulating energy usage amount for each application of a model customer's facility whose conditions are similar to that of the target customer's facility. However, the breakdown estimation unit 10 may use a simpler model case when high accuracy is not required, such as in a case where indications of energy usage amounts by application are obtained.

For example, when indications of energy usage amounts, by month, of the respective applications of "air conditioning", "lighting", "outlet power", and "other" are obtained, the breakdown estimation unit 10 can use a model case in which energy usage amounts per business day of applications other than "air conditioning" are assumed to be constant. That is, in this model case, an energy usage amount per one business day of each of the applications of "lighting", "outlet power", and "other" is defined, and energy usage amounts by application are determined for each month according to the number of business days of the month. In this case, the breakdown estimation unit 10 prorates, by the third processing portion 103, the energy usage amount of each of the applications of "lighting", "outlet power", and "other" by month according to the number of business days of respective months. Note that, even this case is similar to the above embodiment in that the breakdown estimation unit 10 estimates, by the fourth processing portion 104, the residual amount to be the energy usage amount of the "air conditioning" application.

### Embodiment 2

An energy-saving evaluation device 1 of the present embodiment differs from the energy-saving evaluation device of Embodiment 1 in that a breakdown estimation unit 10 breaks down record values of energy usage amounts into five applications of which "freezing and refrigeration" for operating a freezing and refrigeration facility is added to "air conditioning", "lighting", "outlet power", and "other". In the present embodiment, a store with a freezing and refrigeration facility such as a convenience store or a supermarket is assumed to be a target customer's facility. Hereinafter, similar configurations to Embodiment 1 are provided the same reference sign, and redundant description thereof will be omitted.

In the present embodiment, a model generation unit 13 obtains a simulation result in which energy usage amounts of a model customer's facility by month for one year are broken down into five applications of "air conditioning", "lighting", "outlet power", "other", and "freezing and refrigeration" as a model case, in accordance with the breakdown estimation unit 10. To be specific, the model generation unit 13 obtains an energy usage amount for the "freezing and refrigeration" application by multiplication of a floor area of each of departments that includes the freezing and refrigeration facility (meat department, fresh fish department, or the like, in supermarket) at the model customer's facility with a basic unit, for example.

In this way, the model generation unit 13 simulates by month the energy usage amount for the applications of "air conditioning", "lighting", "outlet power", "freezing and refrigeration", and "other" for the model customer's facility whose conditions are common to the target customer's facility. The model generation unit 13 generates a model case in which the energy usage amounts by month for one year at the model customer's facility are broken down into above five applications by repeating the simulation by month for one year. The model generation unit 13 outputs the obtained model case to the breakdown estimation unit 10.

Also, in the present embodiment, the above described one application that is assigned to residual amount record values of the energy usage amounts by a fourth processing portion 104 is assumed to be "air conditioning", similar to Embodiment 1. That is, the energy usage amount of the "freezing and refrigeration" application is considered to be fixed compared with the "air conditioning" application, since although small variations occur due to changes in load operation, the variations are not as large as that of the "air conditioning" application. Thus, in the present embodiment, the breakdown estimation unit 10 first prorates the energy usage amounts of "lighting", "outlet power", "freezing and refrigeration", and "other" applications that are considered to be fixed, and regards the residual amount as the energy usage amount of the variable "air conditioning" application, and as a result highly-accurate breakdown of the energy usage amount is realized.

Hereinafter, a specific method (energy-saving evaluation method) in which an energy usage amount of a target customer's facility is broken down by application using the energy-saving evaluation device 1 will be described with reference to FIGS. 7A to 9C.

A user, first, inputs condition information necessary for the target customer's facility using the condition input unit 12. Further, the user inputs record values of energy usage amounts by month shown in FIG. 7A using the record input unit 11. The record values input at this time are record values of overall energy usage amounts of the target customer's facility that are not broken down by application. The breakdown estimation unit 10 obtains a record value of the overall energy usage amount in one year of the target customer's facility (17941[GJ], here), as shown in FIG. 7B, by summing up the record values of respective months that are input in this way.

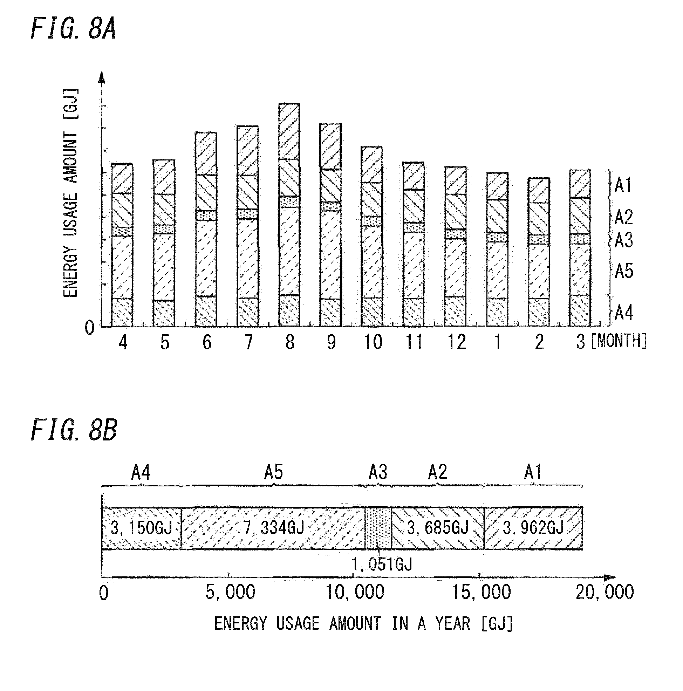

The model generation unit 13 obtains a model case in which the energy usage amounts of respective months for one year at the model customer's facility are broken down into five applications of air conditioning A1, lighting A2, outlet power A3, freezing and refrigeration A5, and others A4, as shown in FIG. 8A, based on the condition information input by the condition input unit 12. Further, the model generation unit 13 obtains energy usage amounts per year, by application, at the model customer's facility, as shown in FIG. 8B, by adding up the energy usage amounts, by application, of the model case for one year. In FIG. 8B, as the breakdown of the energy usage amount per year of the model case, a case where the air conditioning A1, lighting A2, outlet power A3, freezing and refrigeration A5, and others A4 are 3962[GJ], 3685[GJ], 1051[GJ], 7334[GJ], and 3150[GJ], respectively, is shown as an example.

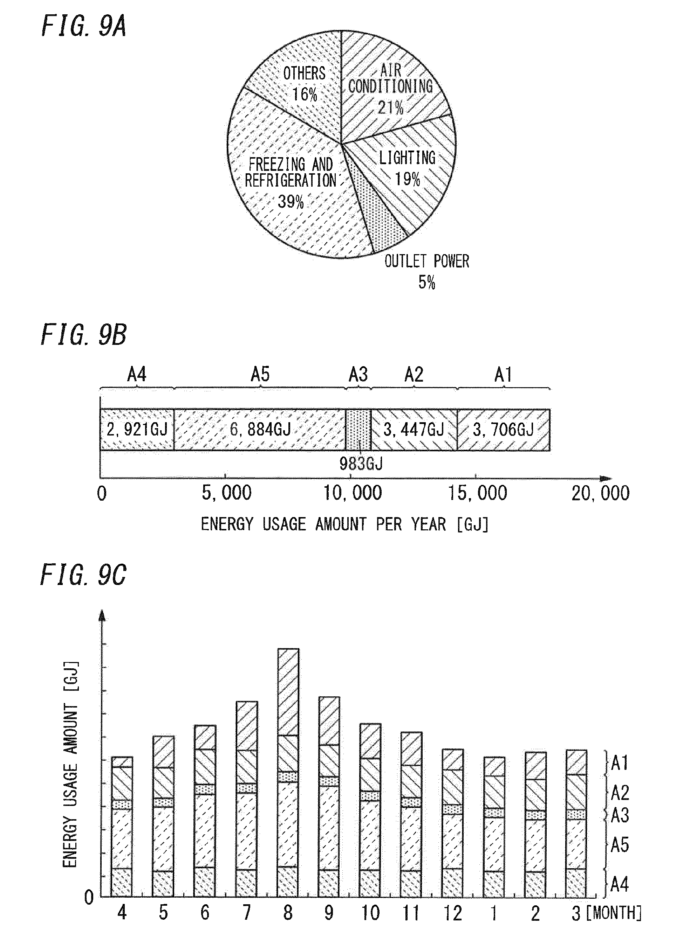

Then, the breakdown estimation unit 10 first obtains, by a first processing portion 101, a component ratio, by application, of the energy usage amount per year (see FIG. 8B) at the model customer's facility as shown in FIG. 9A (first processing step). In the example shown in FIG. 9A, the "air conditioning" application, the "lighting" application, the "outlet power" application, the "freezing and refrigeration" application, and the "other" application are 21[%], 19[%], 5[%], 39[%], and 16[%], respectively.

Next, the breakdown estimation unit 10 prorates by application, as shown in FIG. 9B, by a second processing portion 102, the record value of the energy usage amount in one year (see FIG. 7B) with the component ratio obtained in the first processing step (second processing step). In the example in FIG. 9B, the breakdown of the record value of the energy usage amount in one year is 3706[GJ] for air conditioning A1, 3447[GJ] for lighting A2, 983[GJ] for outlet power A3, 6884[GJ] for freezing and refrigeration A5, and 2921 [GJ] for others A4.

After that, the breakdown estimation unit 10 prorates, by a third processing portion 103, the energy usage amounts in one year, by month, of each application obtained in the second processing step, excluding the energy usage amount of the air conditioning A1 application, with the same component ratio as that of the model case (third processing step). Then, the breakdown estimation unit 10 breaks down, for each month, by a fourth processing portion 104, the residual amount obtained by subtracting the energy usage amounts prorated in third processing step from the record value of the energy usage amount (see FIG. 7A) to air conditioning A1 (fourth processing step). That is, the breakdown estimation unit 10 breaks down the record values of the energy usage amount by month into applications (A1 to A5), as shown in FIG. 9C, in third processing step and fourth processing step, and estimates breakdown of the record values by application.

As described above, according to the energy-saving evaluation device 1 of the present embodiment, by changing the model case applied, energy applications can be easily changed into which the breakdown estimation unit 10 breaks down. Therefore, the user can estimate energy usage amounts by application for an office without a freezing and refrigeration facility and for a supermarket with a freezing and refrigeration facility using the energy-saving evaluation device 1 with the same specification, for example.

The other configurations and functions are similar to Embodiment 1.

Incidentally, in each embodiment described above, although a case where energy usage amounts by application or energy-saving effects are estimated using an energy-saving evaluation device 1 that is configured by a computer is described, the configuration is not limited thereto and a server device may be used instead of the energy-saving evaluation device 1, for example.

The server device (not shown) is connected to a network such as the Internet, and is configured to be capable of two-way communication with a user terminal (not shown) constituted by a personal computer or the like. The server device is provided with, similar to the energy-saving evaluation device 1 described above, functions of the breakdown estimation unit, the model generation unit, the effect storing unit, the effect estimation unit, and the presentation unit. The breakdown estimation unit has functions of the first processing portion, the second processing portion, the third processing portion, and the fourth processing portion. Further, the server device includes a communication unit that is capable of two-way communication with the user terminal.

The server device acquires, when a target period's worth of record values of energy usage amounts at a target customer's facility are input by the user terminal, the record values via the communication unit and inputs them to the breakdown estimation unit. Also, the server device acquires, when condition information is input by the user terminal, the condition information via the communication unit and inputs them to the model generation unit. The functions of the breakdown estimation unit and the model generation unit are similar to those of the embodiments described above and description thereof will be omitted.

The presentation unit of the server device presents breakdown results by the breakdown estimation unit or estimation results by the effect estimation unit to the user terminal via the communication unit. Note that the server device desirably has a function as a web server. This enables the user to receive services described above (presentation of breakdown results by a breakdown estimation unit or estimation results by an effect estimation unit) using a general computer that has a web browser function as the user terminal.

Thus, in a case where a server device is used instead of the energy-saving evaluation device 1, it has an advantage in that change of service contents that the server device provides, such as adding of a model case, adding or modifying of energy-saving measures, or the like, can be easily performed by an administrator of the server device.

## Claims

1. An energy-saving evaluation device comprising:
a record input unit configured to input a predetermined target period's worth of record values of energy usage amounts at a target customer's facility for unit periods obtained by dividing the target period into a plurality of periods; and
a breakdown estimation unit configured to breakdown the record values input by the record input unit into energy applications,
wherein the breakdown estimation unit includes:
a first processing portion configured to obtain a component ratio, by application, of an overall energy usage amount in the target period, using a model case in which an energy usage amount for each of the unit periods in the target period is broken down into the applications;
a second processing portion configured to prorate, by application, the record value of the overall energy usage amount in the target period with the component ratio obtained by the first processing portion;
a third processing portion configured to prorate, by unit period, the energy usage amount of each application prorated by the second processing portion, excluding the energy usage amount of one application, with a component ratio, by unit period, of the energy usage amount of the corresponding application in the model case; and
a fourth processing portion configured to estimate, for each unit period, a residual amount obtained by subtracting the energy usage amounts prorated by the third processing portion from the record value of the energy usage amount as the energy usage amount of the one application in the unit period.

2. The energy-saving evaluation device according to claim 1, further comprising:
a condition input unit configured to input condition information of the target customer's facility including a scale and a usage mode of the target customer's facility; and
a model generation unit configured to obtain the model case based on the condition information.

3. The energy-saving evaluation device according to claim 1 or 2,
wherein the one application is operating an air conditioning device.

4. The energy-saving evaluation device according to claim 1 or 2, further comprising:
an effect storing unit that stores in advance, for each application, an energy usage amount reduction rate obtained when an energy-saving measure is implemented; and
an effect estimation unit configured to estimate an energy-saving effect obtained when the energy-saving measure is implemented on the target customer's facility using the reduction rate and the breakdown result by the breakdown estimation unit.

5. The energy-saving evaluation device according to claim 3, further comprising:
an effect storing unit that stores in advance, for each application, an energy usage amount reduction rate obtained when an energy-saving measure is implemented; and
an effect estimation unit configured to estimate an energy-saving effect obtained when the energy-saving measure is implemented on the target customer's facility using the reduction rate and the breakdown result by the breakdown estimation unit.

6. The energy-saving evaluation device according to claim 4,
wherein the effect estimation unit is configured to estimate the energy-saving effect for each application.

7. The energy-saving evaluation device according to claim 5,
wherein the effect estimation unit is configured to estimate the energy-saving effect for each application.

8. An energy-saving evaluation method comprising:
a record input step of inputting a predetermined target period's worth of record values of energy usage amounts at a target customer's facility for unit periods obtained by dividing the target period into a plurality of periods; and
a breakdown estimation step of breakdown the record values input by the record input unit into energy applications,
wherein the breakdown estimation step includes:
a first processing step of obtaining a component ratio, by application, of an overall energy usage amount in the target period, using a model case in which an energy usage amount for each of the unit periods in the target period is broken down into the applications;
a second processing step of prorating, by application, the record value of the overall energy usage amount in the target period with the component ratio obtained by the first processing portion;
a third processing step of prorating, by unit period, the energy usage amount of each application prorated by the second processing portion, excluding the energy usage amount of one application, with a component ratio, by unit period, of the energy usage amount of the corresponding application in the model case; and
a fourth processing step of estimating, for each unit period, a residual amount obtained by subtracting the energy usage amounts prorated by the third processing portion from the record value of the energy usage amount as the energy usage amount of the one application in the unit period.

9. A server device comprising:
a communication unit configured to be communicable with a user terminal,
a breakdown estimation unit configured to, when a predetermined target period's worth of record values of energy usage amounts at a target customer's facility for unit periods obtained by dividing the target period into a plurality of periods are input by the user terminal, breakdown the record values into energy applications,
wherein the breakdown estimation unit includes:
a first processing portion configured to obtain a component ratio, by application, of an overall energy usage amount in the target period, using a model case in which an energy usage amount for each of the unit periods in the target period is broken down into the applications;
a second processing portion configured to prorate, by application, the record value of the overall energy usage amount in the target period with the component ratio obtained by the first processing portion;
a third processing portion configured to prorate, by unit period, the energy usage amount of each application prorated by the second processing portion, excluding the energy usage amount of one application, with a component ratio, by unit period, of the energy usage amount of the corresponding application in the model case; and
a fourth processing portion configured to estimate, for each unit period, a residual amount obtained by subtracting the energy usage amounts prorated by the third processing portion from the record value of the energy usage amount as the energy usage amount of the one application in the unit period.

10. A program for causing a computer to function as:
a record input unit configured to input a predetermined target period's worth of record values of energy usage amounts at a target customer's facility for unit periods obtained by dividing the target period into a plurality of periods;
a first processing portion configured to obtain a component ratio, by application, of an overall energy usage amount in the target period, using a model case in which an energy usage amount for each of the unit periods in the target period is broken down into energy applications;
a second processing portion configured to prorate, by application, the record value of the overall energy usage amount in the target period with the component ratio obtained by the first processing portion;
a third processing portion configured to prorate, by unit period, the energy usage amount of each application prorated by the second processing portion, excluding the energy usage amount of one application, with a component ratio, by unit period, of the energy usage amount of the corresponding application in the model case; and
a fourth processing portion configured to estimate, for each unit period, a residual amount obtained by subtracting the energy usage amounts prorated by the third processing portion from the record value of the energy usage amount as the energy usage amount of the one application in the unit period.
